## Europäisches Patentamt
## European Patent Office
## Office européen des brevets

(19)

(11) Numéro de publication: **0 071 041**
**B1**

(12)

# FASCICULE DE BREVET EUROPEEN

(45) Date de publication du fascicule du brevet:
**17.09.86**

(51) Int. Cl.⁴: **B 65 G 47/19,** B 65 G 27/32

(21) Numéro de dépôt: **82105981.3**

(22) Date de dépôt: **05.07.82**

(54) **Procédé et appareil de transport en continu.**

(30) Priorité: **23.07.81 CH 4804/81**

(73) Titulaire: **SOCIETE DES PRODUITS NESTLE S.A., Case postale 353, CH-1800 Vevey (CH)**

(72) Inventeur: **Cabi-Akman, Robert, Rue de la Mouline 4, CH-1022 Chavannes (CH)**

(43) Date de publication de la demande:
**09.02.83 Bulletin 83/6**

(45) Mention de la délivrance du brevet:
**17.09.86 Bulletin 86/38**

(84) Etats contractants désignés:
**AT BE DE FR GB IT NL SE**

(56) Documents cités:
**DE - A - 2 935 739**
**DE - B - 1 022 162**
**FR - A - 2 408 865**
**GB - A - 788 313**
**GB - A - 2 013 633**
**GB - A - 2 030 731**
**US - A - 3 648 136**
**US - A - 3 809 212**

EP 0 071 041 B1

**Description**

La présente invention a pour objet un procédé de transport en continu, dans lequel un produit particulaire est transporté le long d'au moins un plateau vibré à une fréquence fondamentale déterminée et l'on détecte et surveille les variations d'amplitude des vibrations dudit plateau pour régler le débit du produit transporté.

La présente invention a également pour objet un appareil de transport en continu, comprenant au moins un plateau vibrant pour le transport d'un produit particulaire et un dispositif de surveillance des variations d'amplitude des vibrations dudit plateau pour le réglage du débit du produit transporté.

Dans un appareil de transport en continu à au moins un plateau vibrant destiné au transport de produits particulaires, on doit souvent craindre l'apparition d'un bourrage qui bloque le courant de produit particulaire. Un tel bourrage est à craindre par exemple lorsque le produit particulaire attache localement à la surface du plateau et forme un barrage derrière lequel le produit s'accumule. Si le barrage n'est pas rapidement résorbé ou supprimé, le produit accumulé derrière lui peut attacher à son tour, le phénomène peut se propager et provoquer finalement ce que l'on appelle un bourrage qui bloque complètement l'écoulement du produit.

On connaît par GB-A-2 030 731 un système de détection et surveillance de l'amplitude des vibrations fondamentales d'un plateau vibrant transportant un produit particulaire, destiné à régler le débit du produit transporté. On connaît par US-A-3 648 136 un dispositif de surveillance des vibrations fondamentales d'un plateau vibrant à l'aide d'un accéléromètre, destiné à maintenir l'amplitude des vibrations fondamentales du plateau dans une fourchette étroite par un réglage de la puissance du vibreur en fonction de l'amplitude surveillée des vibrations fondamentales du plateau.

Enfin, on connaît par FR-A-2 408 865, un système consacré soit au maintien de la fréquence, soit au maintien de l'amplitude des vibrations, basé sur la comparaison permanente entre les vibrations appliquées au plateau par un dispositif vibreur (vibrations d'excitation) et les vibrations du plateau lui-même. La comparaison fait intervenir l'amplitude, la fréquence et la phase des vibrations fondamentales du vibreur et du plateau.

Cependant, aucun des documents cités ci-dessus ne donne une indication sur la démarche à entreprendre pour prévenir le bourrage éventuel d'un produit particulaire susceptible d'attacher localement à la surface d'un plateau vibrant.

La présente invention a pour but d'éliminer le problème du bourrage de produits particulaires.

A cet effet, le procédé selon la présente invention est caractérisé par le fait que l'on prévient un bourrage de produit particulaire sur au moins un plateau en surveillant au moins une harmonique des vibrations fondamentales sensible à la charge du plateau et en détectant si l'amplitude de ladite harmonique dépasse ou non au moins un seuil critique déterminé.

De même, l'appareil selon la présente invention est caractérisé par le fait qu'il comporte un dispositif de surveillance d'au moins une harmonique des vibrations fondamentales d'au moins un plateau sensible à la charge dudit plateau, ledit dispositif de surveillance détectant si l'amplitude de ladite harmonique sensible à la charge dépasse ou non au moins un seuil critique déterminé. De préférence, le dispositif de surveillance d'au moins une harmonique des vibrations fondamentales se compose de au moins un moyen de mesure électromécanique des vibrations fixé audit plateau et relié électriquement à au moins un circuit électronique de filtrage et comparaison branché électriquement sur au moins un interrupteur.

En effet, on a constaté que certaines harmoniques des oscillations ou vibrations fondamentales d'un plateau vibré à une fréquence fondamentale déterminée étaient sensibles à la charge en produit du plateau. On y a vu une possibilité pratique et directe de contrôler en permanence l'état de charge d'un plateau exposé aux risques de bourrage de produits particulaires et d'intervenir automatiquement avant que le phénomène d'attachement local du produit et d'accumulation ne se propage jusqu'à provoquer le bourrage proprement dit.

Pour mettre en œuvre le présent procédé, on peut déterminer au préalable quelles harmoniques sont particulièrement sensibles à la charge du ou des plateaux concernés. Cette sensibilité va dépendre du type de plateau vibrant et des particularités de l'installation. En effet, l'apparition des harmoniques elles-mêmes est due à des imperfections du système vibrant qui varient nécessairement d'un type à l'autre. Cependant, on a vérifié qu'il est pratiquement toujours possible de choisir une ou plusieurs harmoniques qui conviennent, notamment parmi les harmoniques 6 à 12. On peut également surveiller la somme des amplitudes de plusieurs harmoniques sensibles à la charge dudit plateau. De préférence, on prévoit l'enclenchement et/ou le déclenchement automatique d'une alarme, optique ou acoustique par exemple, lorsque ladite amplitude franchit un premier seuil critique ou revient en deçà de ce premier seuil. De même, on peut prévoir l'arrêt ou la remise en marche automatique de la ligne ou de l'alimentation en produit dudit plateau, ou la déviation ou le rétablissement du courant de produit lorsque ladite amplitude franchit un second seuil critique ou revient en deçà de ce second seuil.

On peut fixer la hauteur de ces premier et second seuils par des essais préliminaires qui indiqueront à partir de quelle charge, pour un produit déterminé et dans des conditions de transport déterminées, il existe des risques d'apparition de bourrages sur un plateau déterminé.

L'appareil selon la présente invention est décrit plus en détail ci-après en référence au dessin ci-joint donné à titre d'exemple et dans lequel

– la figure 1 est un schéma d'une forme d'exécution de l'appareil, et

– la figure 2 est un schéma bloc d'une forme d'exécution du dispositif de surveillance des vibrations.

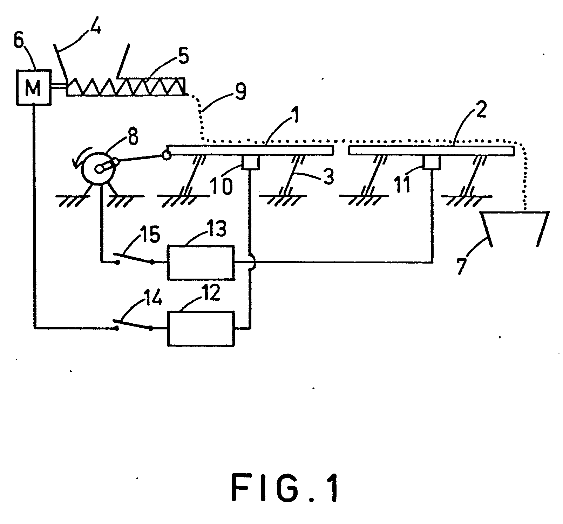

L'appareil représenté schématiquement sur la figure 1 comprend une ou plusieurs lignes composées chacune de deux plateaux vibrants successifs, désignés par les chiffres de référence 1 et 2, montés sur des ressorts à lames obliques 3. Pour chaque ligne, l'appareil présente au moins une trémie d'entrée 4 débouchant sur une vis d'alimentation 5 entraînée par un moteur 6, ainsi qu'une trémie de sortie 7. Les plateaux 1 et 2 sont vibrés chacun par un dispositif vibreur 8 représenté uniquement pour le premier plateau.

Dans la forme d'exécution représentée à cette figure 1, l'appareil comporte un dispositif de surveillance 10–15 des vibrations des deux plateaux détectant si l'amplitude d'au moins une harmonique sensible à la charge desdits plateaux en produit particulaire 9 dépasse ou non au moins un seuil critique déterminé. Le dispositif de surveillance représenté se compose de moyens de mesure électromécanique des vibrations 10 et 11 fixés auxdits plateaux 1 et 2 et reliés électriquement chacun à un circuit électronique de filtrage et comparaison 12 et 13 branchés électriquement chacun sur au moins un interrupteur 14 et 15. Les interrupteurs représentés 14 et 15 commandent ici les moyens d'alimentation respectifs des plateaux 1 et 2, à savoir la vis d'alimentation 5 par l'intermédiaire du moteur 6 pour le premier plateau et le premier plateau lui-même par l'intermédiaire de son dispositif vibreur 8 pour le deuxième plateau.

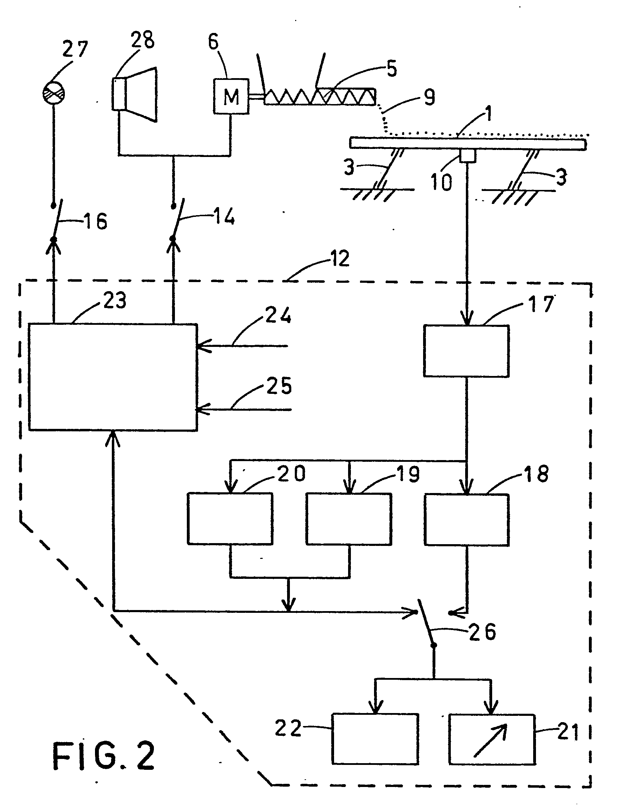

A la figure 2, on voit un schéma bloc d'une forme d'exécution du dispositif de surveillance des vibrations du même type que celui représenté à la figure 1 pour le plateau 1. Ce dispositif de surveillance des vibrations se compose d'un moyen de mesure électromécanique des vibrations 10, en l'occurrence un accéléromètre piézorésistif, relié à un circuit électronique de filtrage et comparaison 12 branché lui-même sur deux interrupteurs 14 et 16. Le circuit de filtrage et comparaison 12 comporte un convertisseur 17 et des filtres passe-bande et redresseurs, à savoir un filtre 18 pour la fréquence fondamentale, en l'occurrence 60 Hz, et deux filtres 19 et 20 pour les harmoniques, en l'occurrence les harmoniques 6 (360 Hz) et 8–12 (480–720 Hz) situées de part et d'autre de la fréquence propre de l'accéléromètre 10. Le circuit 12 comporte en outre en galvanomètre 21 et un enregistreur 22 pour la calibration, l'enregistrement et la lecture de la fréquence fondamentale, un comparateur 23 pour la comparaison de la somme des amplitudes desdites harmoniques avec un premier et un second seuils critiques introduits et fixés dans le comparateur par les entrées respectives 24 et 25, ainsi qu'un commutateur 26 pour la lecture des harmoniques et la calibration du comparateur 23. L'interrupteur 16 commande une alarme optique 27 en fonction du résultat de la comparaison avec le premier seuil 24. L'interrupteur 14 commande le moteur 6 de la vis d'alimentation 5 du plateau 1 en produit 9 ainsi qu'une alarme sonore 28 en fonction du résultat de la comparaison avec le second seuil 25.

On décrit ci-après plus en détail le fonctionnement du circuit électronique de filtrage et comparaison 12 représenté à la figure 2. Dans ce circuit, le conditionneur 17 a pour mission d'amplifier et de calibrer le signal alternatif délivré par l'accéléromètre 10. Le signal amplifié et calibré est partagé et dirigé sur les 3 filtres passe-bande et redresseurs 18, 19 et 20. Le filtre 18 sélectionne la fréquence fondamentale à laquelle le plateau est vibré, à savoir ici 60 Hz, et la redresse afin d'obtenir une tension continue proportionnelle à l'amplitude de l'oscillation ou vibration mécanique fondamentale du plateau 1, tension que l'on peut observer sur le galvanomètre 21 et enregistrer sur l'enregistreur 22. L'accéléromètre 10 utilisé dans cet exemple présente une fréquence propre et entre donc en résonance mécanique à une fréquence voisine de la 7e harmonique de la fondamentale, à savoir vers 420 Hz. C'est pourquoi cette fréquence est éliminée et l'on sélectionne la 6e harmonique avec le filtre 19 et les 8e à 12e harmoniques avec le filtre 20, toutes les harmoniques supérieures à 5 s'étant avérées généralement sensibles à la charge du plateau et les harmoniques 6 à 12 s'étant avérées particulièrement importantes et exploitables dans le présent but. Les filtres 19 et 20 sélectionnent donc leurs fréquences respectives et les redressent. Le filtre 19 fournit une tension continue proportionnelle à l'amplitude de la 6e harmonique, le filtre 20 fournit une tension continue proportionnelle à la somme des amplitudes des harmoniques 8 à 12 et ces deux tensions sont additionnées pour donner une seule tension continue significative de l'état de charge du plateau 1. Cette tension, qui peut être observée également sur le galvanomètre 21, est dirigée sur le comparateur 23 où elle est comparée à deux tensions de consigne ou seuils critiques que l'on a introduits dans le comparateur par les entrées 24 et 25. Ces seuils critiques ont été déterminés et fixés en fonction du résultat d'essais préliminaires montrant à partir de quel niveau de charge le plateau 1 est exposé à des risques de bourrage pour un produit particulaire déterminé et dans des conditions déterminées de transport du produit.

L'appareil décrit ci-dessus à titre d'exemple est ainsi capable d'une réaction immédiate et automatique dès qu'apparaissent des risques de bourrage sur les plateaux 1 et 2. Cette réaction se traduit par l'enclenchement de l'alarme optique 27 lorsqu'on approche d'un premier seuil critique significatif d'un certain risque de bourrage ou par l'enclenchement de l'alarme acoustique 28 et l'arrêt immédiat de l'alimentation en produit du plateau en cause lorsqu'un bourrage est en train de se former. On peut prévoir également selon le type d'appareil un arrêt immédiat de toute la ligne ou une déviation du courant de produit au lieu du simple arrêt de l'alimentation en produit du plateau en cause. A l'inverse, les alarmes 27 et 28 sont interrompues et le fonctionnement de l'alimentation du plateau en cause, voire de toute la ligne, ou le courant normal du produit est rétabli automatiquement lorsque le risque de bourrage a suffisamment diminué ou lorsque le début de bourrage a été résorbé ou supprimé.

**Revendications**

1. Procédé de transport en continu, dans lequel un produit particulaire est transporté le long d'au moins un plateau vibré à une fréquence fondamentale déterminée et l'on détecte et surveille les variations d'amplitude des vibrations dudit plateau pour régler le débit du produit transporté, caractérisé par le fait que l'on prévient un bourrage de produit particulaire sur au moins un plateau en surveillant au moins une harmonique des vibrations fondamentales sensible à la charge du plateau et en détectant si l'amplitude de ladite harmonique dépasse ou non au moins un seuil critique déterminé.

2. Procédé selon la revendication 1, caractérisé par le fait que l'on surveille au moins une des harmoniques 6 à 12.

3. Procédé selon la revendication 1, caractérisé par le fait que l'on surveille la somme des amplitudes de plusieurs harmoniques sensibles à la charge dudit plateau.

4. Procédé selon la revendication 1, caractérisé par le fait que l'on prévoit l'enclenchement et/ou le déclenchement automatique d'une alarme lorsque ladite amplitude franchit un premier seuil critique ou revient en deçà de ce premier seuil.

5. Procédé selon la revendication 1, caractérisé par le fait que l'on prévoit l'arrêt ou la remise en marche automatique de la ligne ou de l'alimentation en produit dudit plateau, ou la déviation ou le rétablissement du courant de produit lorsque ladite amplitude franchit un second seuil critique ou revient en deçà de ce second seuil.

6. Appareil de transport en continu, comprenant au moins un plateau vibrant (1, 2) pour le transport d'un produit particulaire (9) et un dispositif de surveillance des variations d'amplitude des vibrations dudit plateau pour le réglage du débit du produit transporté, caractérisé par le fait qu'il comporte un dispositif de surveillance (10–15) d'au moins une harmonique des vibrations fondamentales d'au moins un plateau (1, 2) sensible à la charge dudit plateau, ledit dispositif de surveillance détectant si l'amplitude de ladite harmonique sensible à la charge dépasse ou non au moins un seuil critique déterminé.

7. Appareil selon la revendication 6, caractérisé par le fait que le dispositif de surveillance d'au moins une harmonique des vibrations fondamentales se compose d'au moins un moyen de mesure électromécanique des harmoniques des vibrations (10, 11) fixé audit plateau (1 , 2) et relié électriquement à au moins un circuit électronique de filtrage et comparaison (12, 13) branché électriquement sur au moins un interrupteur (14, 15, 16).

8. Appareil selon la revendication 7, caractérisé par le fait que ledit interrupteur est branché sur au moins un moyen d'alarme (27, 28).

9. Appareil selon la revendication 7, caractérisé par le fait que ledit interrupteur (14, 15) commande la ligne ou un moyen de déviation du courant de produit ou un moyen d'alimentation (6, 5; 8, 1) dudit plateau (1, 2) en produit (9).

**Claims**

1. A continuous transport method, comprising transporting a particulate product along at least one tray vibrated at a pre-determined basic frequency and monitoring and detecting amplitude variations of the vibrations of said tray in order to regulate the throughput of the transported product, in which an overload of the particulate product on at least one tray is avoided by monitoring at least one harmonic of the basic vibrations sensitive to the load of the tray and detecting whether the amplitude of said harmonic does or does not exceed at least one pre-determined critical threshold.

2. A method according to claim 1, wherein at least one of the harmonics 6 to 12 is monitored.

3. A method according to claim 1, wherein the sum of the amplitudes of several harmonics which are sensitive to the load of the tray is monitored.

4. A method according to claim 1, wherein an alarm is switched on and/or off when the amplitude exceeds a first critical threshold or returns below this first threshold.

5. A method according to claim 1, wherein the line or product supply to the tray is stopped or re-started automatically, or the flow of product is diverted or returned when the amplitude exceeds a second critical threshold or returns below this second threshold.

6. A continuous transport apparatus, comprising at least one vibrating tray (1, 2) for the transport of a particulate product (9) and a device for monitoring the amplitude variations of said tray for regulating the throughput of the transported product, there comprising a device (10–15) for monitoring at least one harmonic of the basic vibrations of at least one tray (1, 2) sensitive to the load of said tray, said monitoring device detecting whether the amplitude of said harmonic sensitive to the load does or does not exceed at least one pre-determined critical threshold.

7. An apparatus according to claim 6, wherein the device for monitoring at least one harmonic of the basic vibrations comprises at least one electromechanical means (10, 11), attached to the tray (1, 2) for measuring the vibrations and electrically connected to at least one electronic filtration and comparison circuit (12, 13) connected electrically to at least one circuit breaker (14, 15, 16).

8. An apparatus according to claim 7, wherein the circuit breaker is connected to at least one alarm means (27, 28).

9. An apparatus according to claim 7, wherein the circuit breaker (14, 15) controls the line or a means for diverting the flow of product or a means (6, 5; 8, 1) for feeding product to the tray (1, 2).

## Patentansprüche

1. Verfahren zur Endlosförderung, bei welchem ein teilchenförmiges Produkt entlang zumindest eines Tisches gefördert wird, der mit einer vorbestimmten Grundfrequenz in Schwingung versetzt wird, und die Veränderungen der Amplitude der Schwingungen des Tisches ermittelt und überwacht werden, um den Durchsatz des geförderten Produktes zu regeln, dadurch gekennzeichnet, dass einem Stau des teilchenförmigen Produktes auf zumindest einem der Tische vorgebeugt wird, indem zumindest eine von der Tischbelastung abhängige Harmonische der Grundschwingungen überwacht wird und ermittelt wird, ob die Amplitude der Harmonischen einen vorbestimmten kritischen Schwellenwert überschreitet oder nicht.

2. Verfahren nach Anspruch 1, dadurch gekennzeichnet, dass zumindest eine der Harmonischen 6 bis 12 überwacht wird.

3. Verfahren nach Anspruch 1, dadurch gekennzeichnet, dass die Summe der Amplituden mehrerer von der Tischbelastung abhängiger Harmonischer überwacht wird.

4. Verfahren nach Anspruch 1, dadurch gekennzeichnet, dass automatisch ein Alarm ausgelöst und/oder abgeschaltet wird, wenn die Amplitude einen ersten kritischen Schwellenwert überschreitet bzw. diesen ersten Schwellenwert unterschreitet.

5. Verfahren nach Anspruch 1, dadurch gekennzeichnet, dass die Förderlinie oder die Produktzufuhr zum Tisch automatisch stillgesetzt oder wieder in Gang gesetzt wird oder eine Ableitung oder Wiederherstellung des Produktstromes erfolgen, wenn die Amplitude einen zweiten kritischen Schwellenwert überschreitet bzw. diesen Schwellenwert unterschreitet.

6. Vorrichtung zur Endlosförderung mit zumindest einem Schwingfördertisch (1, 2) zur Förderung eines teilchenförmigen Produktes (9) und einer Einrichtung zum Überwachen der Veränderungen der Amplitude der Schwingungen des Tisches zwecks Regelung des Durchsatzes des geförderten Produktes, dadurch gekennzeichnet, dass sie eine Einrichtung (10–15) zum Überwachen zumindest einer Harmonischen der Grundschwingungen zumindest eines Tisches (1, 2) in Abhängigkeit von der Belastung desselben aufweist, wobei die Überwachungseinrichtung ermittelt, ob die Amplitude der von der Belastung abhängigen Harmonischen einen vorbestimmten kritischen Schwellenwert überschreitet oder nicht.

7. Vorrichtung nach Anspruch 6, dadurch gekennzeichnet, dass die Einrichtung zum Überwachen zumindest einer Harmonischen der Grundschwingungen zumindest eine elektromechanische Messeinrichtung (10, 11) für die Harmonische der Schwingungen aufweist, die am Tisch (1, 2) fixiert ist und elektrisch mit zumindest einem elektronischen Filter- und Vergleichskreis (12, 13) verbunden ist, der elektrisch an zumindest einem Schalter (14, 15, 16) liegt.

8. Vorrichtung nach Anspruch 7, dadurch gekennzeichnet, dass der Schalter an zumindest eine Alarmeinrichtung (27, 28) angeschlossen ist.

9. Vorrichtung nach Anspruch 7, dadurch gekennzeichnet, dass der Schalter (14, 15) die Förderlinie oder eine Einrichtung zum Ableiten des Produktstromes oder eine Einrichtung (6, 5; 8, 1) zum Zuführen des Produktes (9) zum Tisch (1, 2) steuert.

FIG.1

FIG. 2